# EUROPÄISCHE PATENTSCHRIFT

(11) **EP 1 163 302 B1**
(45) Veröffentlichungstag und Bekanntmachung des Hinweises auf die Patenterteilung: **21.04.2004**
(21) Anmeldenummer: 00918744.4
(22) Anmeldetag: 22.02.2000
(51) Int. Cl.: C09D 5/44

(54) **KATHODISCH ABSCHEIDBARE TAUCHLACKE, DEREN HERSTELLUNG UND VERWENDUNG**
CATHODIC ELECTRODEPOSITION COATINGS, THEIR PRODUCTION AND THEIR USE
VERNIS AU TREMPE A DEPOT CATHODIQUE, SON MODE DE PRODUCTION ET SON UTILISATION

(30) Priorität: 25.02.1999 DE 19908144
(43) Veröffentlichungstag der Anmeldung: 19.12.2001
(73) Patentinhaber: E.I. DU PONT DE NEMOURS & COMPANY INCORPORATED, Wilmington, Delaware 19898 (US)
(72) Erfinder: KLEIN, Klausjörg, D-42289 Wuppertal (DE); KÜHHIRT, Walter, D-42857 Remscheid (DE)
(74) Vertreter: Gille Hrabal Struck Neidlein Prop Roos
(86) Internationale Anmeldenummer: PCT/EP2000/001434
(87) Internationale Veröffentlichungsnummer: WO 2000/050522

(56) Entgegenhaltungen:
- WO-A-95/04093
- US-A- 4 286 073

## Beschreibung

Die Erfindung betrifft kathodisch abscheidbare Tauchlacke (KTL), ihre Herstellung und ihre Verwendung in Verfahren zur Beschichtung elektrisch leitfähiger Substrate durch kathodische Tauchlackierung.

KTL-Überzugsmittel sind in großer Vielfalt bekannt. Aus der Patentliteratur sind zahlreiche Beispiele für ökologisch günstige, bleifreie KTL-Überzugsmittel bekannt geworden, die unterschiedlichste Metallverbindungen, insbesondere Zinn- und/oder Wismutverbindungen, als Vernetzungskatalysatoren enthalten. Beispielsweise sind aus WO 93/24578 KTL-Überzugsmittel bekannt, die Wismutsalze von aliphatischen Hydroxycarbonsäuren als Katalysatoren enthalten. WO 98/10024 beschreibt KTL-Überzugsmittel, die katalytisch wirksame Mischungen von Wismut und Aminocarbonsäuren enthalten. EP-A-0 509 437 beschreibt KTL-Überzugsmittel, welche als Vernetzungskatalysatoren von aromatischen Carbonsöuren abgeleitete Dialkylzinndicarboxylate neben Wismut- oder Zirkonverbindungen als weitere Katalysatoren enthalten.

KTL-Bäder werden ständig umgepumpt und unterliegen dabei einer Scherbelastung. Ein wichtiges Qualitätskriterium bei KTL-Überzugsmitteln ist ihre Scherstabilität. Scherinstabilität tritt bei KTL-Überzugsmittein in Form von Sedimentationen in Erscheinung. Diese Sedimentation führt in der Praxis zu Schmutzeinschlüssen in der KTL-Schicht, insbesondere während des KTL-Beschichtungsvorgangs von in waagerechter Position befindlichen Substratoberflächen. Im Labor sind derartige Sedimentationserscheinungen durch Bestimmung des Siebrückstandes von KTL-Bädern quantifizierbar.

In der WO95/04093 werden härtbare Systeme auf der Basis von blockierten Isocyanaten und Verbindungen mit aktivem Wasserstoff beschrieben, die neben einem Triorganozinn-Katalysator CoKatalysatoren enthalten, die Wismut enthalten können.

Aufgabe der Erfindung ist die Bereitstellung bleifreier kathodisch abscheidbarer Überzugsmittel mit guter Scherstabilität.

Es hat sich gezeigt, dass diese Aufgabe gelöst werden kann mit wässrigen bleifreien KTL-Überzugsmitteln, die Bindemittel, sowie gegebenenfalls Vernetzer, Pigmente und/oder lackübliche Additive enthalten, die dadurch gekennzeichnet sind, dass sie ein oder mehrere Salze von Alkansulfonsäuren aus der Gruppe von Methansulfonsäure, Ethansulfonsäure, Propansulfonsäure, Trifluormethansulfonsäure, Hydroxyethansulfonsäure und Hydroxyproponsulfonsäure von Wismut und/oder von Organowismutverbindungen in einer Gesamtmenge von 0, 2 bis 2 Gew.-%, berechnet als Wismutmetall und bezogen auf den Harzfestkörper, (bezogen auf Bindemittel, gegebenenfalls vorhandenen Vernetzer und gegebenenfalls andere im KTL-Überzugsmittel enthaltene Harzen, wie z.B. Pastenharze) enthalten.

Bei den erfindungsgemäßen bleifreien KTL-Überzugsmitteln handelt es sich um an sich bekannte, wässrige an der Kathode abscheidbare Elektrotauchlocke, denen die vorstehend definierten Alkansulfonsäuresalze als Bleikatalysatoren ersetzende Vernetzungskatalysatoren zugesetzt werden.

Die erfindungsgemäßen KTL-Überzugsmittel sind wässrige Überzugsmittel mit einem Festkörper von beispielsweise 10 bis 30 Gew.-%. Der Festkörper besteht aus dem Harzfestkörper, aus dem erfindungswesentlichen Gehalt an Sulfonsäure- bzw. Organometallsulfonsäuresalzen, gegebenenfalls vorhandenen Pigmenten und/oder Füllstoffen und weiteren Additiven. Der Harzfestkörper besteht aus üblichen KTL-Bindemitteln, die kationische oder in kationische Gruppen überführbare Substituenten sowie zur chemischen Vernetzung fähige Gruppen tragen, und gegebenenfalls vorhandenen KTL-Pastenharzen und Vernetzern. Die kationischen Gruppen können kationische oder in kationische Gruppe überführbare basische Gruppen, z.B. Amino-, Ammonium-, z.B. quartäre Ammonium-, Phosphonium- und/oder Sulfonium-Gruppen sein. Bevorzugt sind Bindemittel mit basischen Gruppen. Besonders bevorzugt sind stickstoffhaltige basische Gruppen, wie Aminogruppen. Diese Gruppen können quaternisiert vorliegen oder sie werden mit einem üblichen Neutralisationsmittel, insbesondere einer anorganischen oder organischen Säure, wie z.B. Sulfonsäuren wie Amidosulfonsäure (Sulfaminsäure) oder Methansulfonsäure, Milchsäure, Ameisensäure, Essigsäure, wie dem Fachmann geläufig, in kationische Gruppen überführt. Der Neutralisationsgrad beträgt beispielsweise 20 bis 80 %.

Bei den kationischen bzw. basischen Bindemitteln kann es sich beispielsweise um primäre, sekundäre und/oder tertiäre Aminogruppen enthaltende Harze handeln, deren Aminzahlen z.B. bei 20 bis 250 mg KOH/g liegen. Das Gewichtsmittel der Molmasse (Mw) der KTL-Harze liegt bevorzugt bei 300 bis 10000. Die erfindungsgemäß einsetzbaren Harze unterliegen keiner Beschränkung. Es können die aus der umfangreichen Patentliteratur bekannten verschiedensten selbstvernetzenden KTL-Bindemittel und fremdvernetzenden KTL-Bindemittel/Vernetzer-Kombinationen eingesetzt werden. Beispiele für solche KTL-Harze sind Amino(meth)acrylatharze, Aminoepoxidharze, Aminoepoxidharze mit endstöndigen Doppelbindungen, Aminoepoxidharze mit primären OH-Gruppen, Aminopolyurethanharze. aminogruppenhaltige Polybutadienharze oder modifizierte Epoxidharz-Kohlendioxid-Amin-Umsetzungsprodukte. Diese Bindemittel können selbstvernetzend sein oder sie werden mit bekannten, dem Fachmann geläufigen Vernetzern im Gemisch eingesetzt. Beispiele für solche Vernetzer sind Aminoplastharze, blockierte Polyisocyanate, Vernetzer mit endständigen Doppelbindungen, Polyepoxidverbindungen, Vernetzer mit cyclischen Carbonatgruppen oder Vernetzer, die umesterungsfähige und/oder umamidierungsfähige Gruppen enthalten.

Zusätzlich zu den KTL-Bindemitteln und gegebenenfalls vorhandenem Vernetzer sowie dem erfindungswesentlichen Anteil an Sulfonsäuresalzen können die erfindungsgemäßen KTL-Überzugsmittel Pigmentè, Füllstoffe und/oder lockübliche Additive enthalten. Als Pigmente und/oder Füllstoffe kommen die üblichen anorganischen und/oder organischen Pigmente in Frage. Beispiele sind Ruß, Titandioxid, Eisenoxid, Kaolin, Talkum oder Siliciumdioxid, Phthalocyaninpigmente und Chinacridonpigmente oder auch Korrosionsschutzpigmente, wie Zinkphosphat. Die Art und Menge der Pigmente richtet sich noch dem Verwendungszweck der KTL-Überzugsmittel. Sollen klare Überzüge erhalten werden, so werden keine oder nur transparente Pigmente, wie z.B. mikronisiertes Titandioxid oder Siliciumdioxid eingesetzt. Sollen deckende Überzüge appliziert werden, so sind bevorzugt farbgebende Pigmente im KTL-Bad enthalten.

Neben den erfindungsgemäß enthaltenen Alkansulfonsäuresalzen (im folgenden als Sulfonsäuresalze bezeichnet) können lackübliche, beispielsweise für KTL-Überzugsmittel übliche Additive in den KTL-Überzugsmitteln enthalten sein. Beispiele dafür sind Netzmittel, Antikratermittel, Verlaufsmittel, Antischaummittel sowie für KTL-Überzugsmittel üblicherweise verwendete organische Lösemittel. Beispiele für derartige Lösemittel sind Alkohole, wie z.B. Cyclohexanol, 2-Ethylhexanol; Glykolether, wie z.B. Methoxypropanol, Ethoxypropanol, Butoxyethanol, Diethylenglykoldiethylether; Ketone, wie z.B. Methylisobutylketon, Methylethylketon, Cyclohexanon; Kohlenwasserstoffe.

Der Mengenanteil der Sulfonsäuresalze im erfindungsgemäßen KTL-Überzugsmittel beträgt 0,2 bis 2 Gew.%, bevorzugt 0,5 bis 1,5 Gew.-%, berechnet als Metall und bezogen auf den Harzfestkörper des KTL-Überzugsmittels. Die Sulfonsäuresalze können in den erfindungsgemäßen KTL-Überzugsmitteln in der wässrigen oder in der dispersen Phase gelöst oder feinverteilt vorliegen.

Die Alkansulfonsäuresalze können hergestellt werden durch Umsetzung der Alkansulfonsäuren mit geeigneten Wismutverbindungen, beispielsweise Wismutoxiden, -hydroxiden oder -carbonaten, wie z.B. bevorzugt Wismutoxid, bzw. mit geeigneten Organowismutverbindungen, beispielsweise Hydrocarbylwismutoxiden. Dabei können eine oder mehrere Wismutverbindungen im Gemisch und/oder eine oder mehrere Organowismutverbindungen im Gemisch mit einer oder mehreren Sulfonsäuren umgesetzt werden. Die Salzbildung kann beispielsweise in Gegenwart von Wasser gegebenenfalls im Gemisch mit organischen Lösemitteln durchgeführt werden.

Die Salzbildung durch Umsetzung der Wismut- bzw. Organowismutverbindungen mit den Sulfonsäuren kann stöchiometrisch oder mit einem Unterschuß oder mit einem Überschuß an Sulfonsäure erfolgen. Beispielsweise kann Wismutoxid (Bi₂O₃) mit der Sulfonsäure im Molverhältnis 1 : 2 bis beispielsweise 8, bevorzugt 1 : 3 bis 7 umgesetzt, wobei ein 1 : 6-Molverhältnis von Wismutoxid zu der Sulfonsäure einer stöchiometrischen Umsetzung entspricht. Für Organowismutsulfonsäuresalze gilt entsprechendes. Nach der Umsetzung kann überschüssige Sulfonsäure vom gebildeten Sulfonsäuresalz abgetrennt oder mit diesem in das erfindungsgemäße KTL-Überzugsmittel eingebracht werden und dort als alleiniges oder Teil der insgesamt als Neutralisationsmittel enthaltenen Säuren dienen. Die Sulfonsäuresalze können als solche isoliert und bei der Herstellung der erfindungsgemäßen KTL-Überzugsmittel eingesetzt werden oder sie werden ohne Isolierung und Reinigung im Gemisch mit weiteren Bestandteilen des Reaktionsmediums aus der Herstellung der Sulfonsäuresalze eingesetzt, beispielsweise als wässrige Lösung.

Die Einarbeitung der Sulfonsäuresalze in die KTL-Überzugsmittel kann auf verschiedene Weise erfolgen. Beispielsweise können die Sulfonsäuresalze einer gegebenenfalls schon neutralisierten KTL-Bindemittellösung vor Zugabe wesentlicher Mengen von Wasser als Verdünnungsmittel zugegeben und anschließend unter Rühren homogenisiert werden. Bei Verwendung der entsprechenden Sulfonsäuren als Neutralisationsmittel für die Bindemittel kann alternativ auch beispielsweise mit Wismutoxid, - hydroxid oder Organowismutoxid gearbeitet werden, wobei die entsprechenden Sulfonsäuresalze in situ gebildet werden; dabei wird vorteilhaft eine gegenüber der zur Neutralisation der KTL-Bindemittel benötigten Sulfonsäuremenge entsprechend angepaßte, erhöhte Sulfonsäuremenge verwendet, in der Regel entsprechend .einem Neutralisationsgrad von über 100 %. Bevorzugt ist es, die Sulfonsäuresalze zur fertigen wössrigen KTL-Bindemitteldispersion oder zum an sich fertigen KTL-Überzugsmittel zuzugeben, beispielsweise als Sulfonsäuresalzlösung, z.B. als wässrige Sulfonsäuresalzlösung. Die Zugabe als Sulfonsäuresalzlösung kann auch in einem früheren Stadium der Herstellung der erfindungsgemäßen KTL-Überzugsmittel erfolgen.

Die erfindungsgemäßen KTL-Überzugsmittel können unabhängig davon, ob es sich um pigmentierte oder um transparente KTL-Überzugsmittel handelt, beispielsweise von Grund auf noch dem sogenannten Einkomponentenverfahren hergestellt werden. Im Fall pigmentierter KTL-Überzugsmittel werden dabei einkomponentige Konzentrate hergestellt durch Verteilen, beispielsweise Dispergieren und gegebenenfalls Anreiben von Pigmenten und Füllstoffen in der organischen Lösung eines KTL-Bindemittels, beispielsweise eines für KTL-Überzugsmittel geeigneten Pastenharzes, Zusatz weiteren organisch gelösten KTL-Bindemittels, Neutralisation mit Säure und im allgemeinen Verdünnen mit Wasser. Die Konzentrate können wasserarm oder wasserfrei und im Regelfall neutralisiert sein. Sie werden bei der Neuerstellung eines KTL-Bades mit Wasser oder im Falle der Festkörperkompensation mit durch KTL-Abscheidung an Festkörper verarmtem KTL-Badinhalt vermischt. Der erfindungswesentliche Zusatz an Sulfonsäuresalz kann nach allen vorstehend beschriebenen Zugabemethoden erfolgen.

Die erfindungsgemößen KTL-Überzugsmittel können ebenfalls unabhängig davon, ob es sich um pigmentierte oder um transparente KTL-Überzugsmittel handelt, beispielsweise auch im sogenannten Zweikomponentenverfahren hergestellt werden. Der erfindungswesentliche Zusatz an Sulfonsäuresalz kann dabei wie nachstehend erläutert erfolgen.

Bei den zweikomponentigen KTL-Materialien, die zur Herstellung der erfindungsgemäßen KTL-Überzugsmittel verwendet werden können, handelt es sich um a) eine Bindemittelkomponente in Form einer lösemittelfreien oder lösemittelarmen, wässrigen, KTL-Bindemittel und gegebenenfalls Vernetzer enthaltenden Dispersion (KTL-Dispersion) und b) eine separate Pigment- und/oder Katalysatorpaste. Im Falle deckend pigmentierter KTL-Überzugsmittel wird eine deckende Pigmente enthaltende Pigmentpaste b) verwendet. Im Falle transparenter KTL-Überzugsmittel kann eine transparente Pigmente enthaltende Pigmentpaste b) verwendet werden. Dabei kann die Komponente a) und/oder die Komponente b) Sulfonsäuresalz enthalten.

Bevorzugt handelt es sich bei den zweikomponentigen KTL-Materialien um a) eine Bindemittelkomponente in Form einer lösemittelfreien oder lösemittelarmen, wässrigen, KTL-Bindemittel und gegebenenfalls Vernetzer enthaltenden Dispersion (KTL-Dispersion) und b1) eine separate Pigmentpaste und/oder b2) eine separate Sulfonsäuresalz enthaltende Katalysatorpaste oder b3) eine separate Sulfonsäuresalz enthaltende Katalysatorpräparation. Im Falle deckend pigmentierter KTL-Überzugsmittel wird eine deckende Pigmente enthaltende Pigmentpaste b1) verwendet. Im Falle transparenter KTL-Überzugsmittel kann eine transparente Pigmente enthaltende Pigmentpaste b1) verwendet werden. Wird eine Pigmentpaste b1) verwendet, kann diese den Sulfonsäuresalzkatalysator enthalten, eine Katalysatorpaste b2) oder Katalysatorpräparation b3) ist dann nicht notwendig. Enthält die Pigmentpaste b1) keinen Sulfonsäuresalzkatalysator oder erfolgt die Herstellung der KTL-Überzugsmittel ohne Verwendung einer Pigmentpaste b1), wird eine Katalysatorpaste b2) oder bevorzugt eine Katalysatorpräparation b3) verwendet.

Das Verdünnen der Komponenten a) und b) bzw. a) und b1) und/oder b2) oder b3) mit Wasser oder mit durch KTL-Abscheidung an Festkörper verarmtem KTL-Badinhalt erfolgt bevorzugt separat, beispielsweise durch separate aber parallele Zudosierung zum Wasser (Ersterstellung eines KTL-Bades) oder an Festkörper verarmten KTL-Bad (Festkörperkompensation).

Die Pigmentpasten b1) können die Sulfonsäuresalze enthalten oder frei davon sein. Pigmentpasten b1) können hergestellt werden durch Dispergieren der Pigmente und Füllstoffe und gegebenenfalls der Sulfonsäuresalze in KTL-Bindemitteln, bevorzugt in KTL-Pastenharzen. Solche Harze sind dem Fachmann geläufig. Beispiele für in KTL-Bädern verwendbare Pastenharze sind in der EP-A-0 183 025 und in der EP-A-0 469 497 beschrieben.

Katalysatorpasten b2) können beispielsweise hergestellt werden durch Vormischen, beispielsweise Vordispergieren geeigneter Wismut- oder Organowismutverbindungen mit Sulfonsäure in Gegenwart von organischem Lösemittel und/oder Wasser, und anschließendes Dispergieren und gegebenenfalls Vermahlen der erhaltenen Mischung mit KTL-Bindemittel, bevorzugt mit KTL-Pastenharz und Wasser.

Bei der Katalysatorpräparation b3) kann es sich um eine feinteilige Suspension, beispielsweise eine kolloidale oder echte Lösung handeln, im einfachsten Fall handelt es sich um eine wässrige Lösung des Wismutsulfonsäuresalzes oder Organowismutsulfonsäuresolzes.

Aus den erfindungsgemäßen KTL-Überzugsmitteln können KTL-Überzugsschichten in üblicher Weise auf elektrisch leitfähigen, beispielsweise elektrisch leitfähigen oder leitfähig gemachten, beispielsweise durch Metallisierung elektrisch leitfähig gemachten Kunststoffsubstroten oder insbesondere metallischen Substraten kathodisch abgeschieden werden. Die Erfindung betrifft daher auch das Verfahren zur kathodischen Abscheidung der erfindungsgemäßen KTL-Überzugsmittel auf derartigen Substraten.

Als metallische Substrate können Teile aus sämtlichen üblichen Metallen, beispielsweise die in der Automobilindustrie üblichen Metallteile, insbesondere Automobilkarossen und deren Teile eingesetzt werden. Beispiele sind Bauteile aus Aluminium, Magnesium oder deren Legierungen und insbesondere Stahl, z.B. unverzinkt oder mit Reinzink, Zink-Nickel-Legierung oder Zink-Eisen-Legierung verzinkt. Die Metallsubstrate können in üblicher Weise phosphatiert und passiviert sein. Der Korrosionsschutz von aus den erfindungsgemäßen KTL-Überzugsmitteln beispielsweise auf Stahl abgeschiedenen Grundierungen ist auch auf Blankstahl oder auf lediglich phosphotiertern, nicht passiviertem Stahl hervorragend. Die verschiedenen Substrate können gemeinschaftlich an einem Werkstück vorhanden sein (Gemischtbauweise). Ebenso können bereits teilweise oder vollständig vorbeschichtete Metallteile oder Kunststoffteile an dem Werkstück vorhanden sein, die das erfindungsgemäße Verfahren beispielsweise unverändert durchlaufen, d.h. auf deren Oberfläche während des erfindungsgemößen Verfahrens insbesondere keine KTL-Überzugsschicht abgeschieden wird.

Noch der Beschichtung mit dem erfindungsgemäßen KTL-Überzugsmittel wird der Überzug durch Einbrennen beispielsweise in direkt und/oder indirekt befeuerten Einbrennöfen vernetzt z.B. bei Objekttemperaturen von 130 bis 200°C. Handelt es sich beispielsweise um eine KTL-Grundierung, können weitere Folgeschichten aufgebracht werden.

Die erfindungsgemäßen KTL-Bäder sind bleifrei und zeigen auch bei Scherbelostung keine oder nur äußerst geringe Sedimentationserscheinungen.

### Beispiel 1 (Herstellung von Wismuthydroxycarbonsäuresalzen):

Deionisiertes Wasser und Hydroxycarbonsäure werden vorgelegt und auf 70°C erwärmt. Unter Rühren wird handelsübliches Wismutoxid (Bi₂O₃) portionsweise zugegeben. Nach weiteren 6 Stunden Rühren bei 70°C wird der Ansatz auf ca. 20°C gekühlt und 12 Stunden ohne Rühren belassen. Schließlich wird der Niederschlag abfiltriert, mit wenig Wasser und Ethanol gewaschen und bei einer Temperatur von 40 bis 60°C getrocknet.

Folgende Salze werden unter Verwendung der angegebenen Mengenanteile hergestellt:

### Wismutlactat:

466 Teile (1 Mol) Wismutoxid + 901 Teile (7 Mol) Milchsäure 70 % in Wasser

### Wismutdimethylolpropionat:

466 Teile (1 Mol) Wismutoxid + 938 Teile (7 Mol) Dimethylolpropionsäure + 2154 Teile Wasser

### Beispiel 2 (Herstellung von Wismutmethansulfonat):

Eine Mischung aus 296 g deionisierten Wassers und 576 g (6 mol) Methansulfonsäure wird vorgelegt und auf 80°C erwärmt. Unter Rühren werden 466 g (1 mol) handelsübliches Wismutoxid (Bi₂O₃) portionsweise zugegeben. Nach 3 Stunden entsteht eine getrübte Flüssigkeit, die bei Verdünnen mit 5400 g deionisiertem Wasser eine opaleszierende Lösung ergibt. Nach Eindampfen der Lösung verbleibt Wismutmethansulfonat.

### Beispiel 3 (Herstellung von KTL-Dispersionen)

a) 832 Teile des Monocarbonats eines Epoxidharzes auf der Basis von Bisphenol A (Handelsprodukt Epikote 828) werden mit 830 Teilen eines handelsüblichen Polycaprolactonpolyols (Handelsprodukt CAPA 205) und 712 Teilen Diglykoldimethylether gemischt und bei 70 bis 140°C mit ungefähr 0,3 % BF₃-Etherat zur Reaktion gebracht bis eine Epoxidzahl von 0 erreicht wird. Zu diesem Produkt werden bei 40 bis 80°C in Gegenwart von 0,3 % Zn-Acetylacetonat als Katalysator 307 Teile eines Umsetzungsproduktes aus 174 Teilen Toluylendiisocyanat und 137 Teilen 2-Ethylhexanol unter Zugabe von 0,3 % Benzyltrimethylammoniumhydroxid gegeben. Es wird bis zu einem NCO-Wert von ca. 0 umgesetzt und dann mit Diglykoldimethylether auf einen Festkörpergehalt von 70 Gew.-% eingestellt.
b) Zu 1759 Teilen eines Biscarbonats eines Epoxidharzes auf der Basis von Bisphenol A (Handelsprodukt Epikote 1001) werden bei 60 bis 80°C 618 Teile eines Umsetzungsproduktes aus 348 Teilen Toluylendiisocyanat und 274 Teilen 2-Ethylhexanol langsam zugegeben unter Zugabe von 0,3 % Benzyltrimethylammoniumhydroxid. Die Reaktion wird bis zu einem NCO-Wert von ca. 0 fortgesetzt.
c) Zu 860 Teilen Bishexamethylentriamin gelöst in 2315 Teilen Methoxypropanol werden bei einer Temperatur von 20 bis 40°C 622 Teile des Umsetzungsproduktes aus 137 Teilen 2-Ethylhexanol mit 174 Teilen Toluylendiisocyanat unter Benzyltrimethylommoniumhydroxid-Katalyse (0,3 %) zugegeben und bis zu einem NCO-Gehalt von ungefähr 0 umgesetzt. Dann werden 4737 Teile des Umsetzungsproduktes b) und 3246 Teile des Reaktionsproduktes a) (jeweils 70 % in Diglykoldimethylether) zugegeben und bei 60 bis 90°C zur Reaktion gebracht. Bei einer Aminzahl von ca. 32 mg KOH/g wird die Reaktion beendet. Das entstehende Produkt wird im Vakuum auf einen Festkörper von ca. 85 % abdestilliert.
d1) Es wird mit 30 mmol Ameisensäure/100 g Harz neutralisiert. Danach wird auf 70°C erhitzt und innerhalb von zwei Stunden Wismutlactat (aus Beispiel 1) unter Rühren portionsweise in einer solchen Menge zugegeben, dass 1,5 Gew.-% Wismut, bezogen auf Feststoffgehalt im Ansatz vorhanden sind. Anschließend wird noch 6 Stunden bei 60 bis 70°C gerührt. Nach Abkühlen wird mit deionisiertem Wasser in eine Dispersion mit einem Festkörper von 40 Gew.-% überführt.
d2) Es wird wie unter d1) beschrieben gearbeitet mit dem Unterschied, dass anstelle von Wismutlactat Wismutmethansulfonat (aus Beispiel 2) verwendet wird.

### Beispiel 4 (Herstellung einer Pigmentpaste)

Zu 223 Teilen des Pastenharzes noch EP-A-0 469 497 A1 Beispiel 1 (55 %) werden unter einem schnellaufenden Rührwerk 15 Teile Essigsäure (50 %), 30 Teile eines handelsüblichen Netzmittels (50 %) und 374 Teile deionisiertes Wasser gegeben.

Dazu werden 5 Teile Ruß, 5 Teile pyrogene Kieselsäure und 560 Teile Titandioxid gegeben. Mit deionisiertem Wasser wird auf ca. 50 % Festkörper eingestellt und auf einer Perlmühle vermahlen. Es entsteht eine stabile Pigmentpaste.

### Beispiel 5 (Herstellung eines wismuthaltigen KTL-Bades, Vergleich)

Zu 815,5 Teilen der Dispersion aus Beispiel 3 d1) werden 4,5 Teile Ameisensäure (50 %) und 1760 Teile deionisiertes Wasser gegeben. Unter gutem Rühren werden 420 Teile Pigmentpaste nach Beispiel 4 zugesetzt. Das erhaltene KTL-Bad wird durch ein zuvor gewogenes Sieb mit 30 µm Maschenweite gegossen. Nach Trocknen des Siebs wird durch Zurückwiegen der Siebrückstand des KTL-Bades bestimmt. Er beträgt unter 10 mg/l KTL-Bad. Das KTL-Bad wird einer Scherbelastung unterworfen, indem es abgedeckt 48 h unter Verwendung eines Magnetrührers (teflonbeschichtetes Magnetrührstäbchen) gerührt wird. Anschließend wird der Siebrückstand des KTL-Bades erneut bestimmt: 83 mg/l KTL-Bad.

### Beispiel 6 (Herstellung eines wismuthaltigen KTL-Bades, erfindungsgemäß)

Zu 815,5 Teilen der Dispersion aus Beispiel 3 d2) werden 4,5 Teile Ameisensäure (50 %) und 1760 Teile deionisiertes Wasser gegeben. Unter gutem Rühren werden 420 Teile Pigmentpaste nach Beispiel 4 zugesetzt. Der Siebrückstand vor und nach Scherbelastung wird analog wie in Beispiel 5 bestimmt. Er beträgt sowohl vor als auch nach der Scherbelastung unter 10 mg/l KTL-Bad.

## Patentansprüche

1. Wässrige, bleifreie kathodisch abscheidbare (KTL)-Überzugsmittel, die Bindemittel, sowie gegebenenfalls Vernetzer, Pigmente und/oder lackübliche Additive enthalten, **dadurch gekennzeichnet, dass** sie ein oder mehrere Salze von Alkansulfonsäuren aus der Gruppe von Methansulfonsäure, Ethansulfonsäure, Propansulfonsäure, Trifluormethansulfonsäure, Hydroxyethansulfonsäure und Hydroxypropansulfonsäure, von Wismut und/oder von Organowismutverbindungen in einer Gesamtmenge von 0,2 bis 2 Gew.-%, berechnet als Wismutmetall und bezogen auf den Harzfestkörper, enthalten.

2. Verfahren zur Herstellung der KTL-Überzugsmittel nach Anspruch 1, **dadurch gekennzeichnet, dass** man die Alkansulfonsäuresalze gemäß Anspruch 1 in ein KTL-Überzugsmittel oder in eine wässrige Dispersion des KTL-Bindemittels einarbeitet und letztere in üblicher Weise zu einem KTL-Überzugsmittel verarbeitet.

3. Verfahren noch Anspruch 2, **dadurch gekennzeichnet, dass** man die Alkansulfonsäuresalze in Form einer Pigmente und/oder Füllstoffe, sowie KTL-Bindemittel und/oder Postenharz enthaltenden Pigmentpaste, in Form einer KTL-Bindemittel oder Pastenharz enthaltenden Katalysatorpaste oder in Form einer aus einer Suspension oder Lösung bestehenden Katalysatorpräparation einarbeitet.

4. Verfahren zur kathodischen Tauchlackierung durch Schalten eines in ein Tauchbad eingebrachtes Substrat mit elektrisch leitender Oberflöche als Kathode, **dadurch gekennzeichnet, dass** man als Tauchbad ein KTL-Überzugsmittel nach Anspruch 1 einsetzt.

5. Verwendung der KTL-Überzugsmittel noch Anspruch 1 zur kathodischen Tauchlackierung.

6. Verwendung der KTL-Überzugsmittel nach Anspruch 1 zur Herstellung von Grundierungsschichten durch kathodische Tauchlockierung von Substraten mit elektrisch leitfähigen Oberflächen.

7. Verwendung noch Anspruch 6 bei der Lackierung von Kraftfahrzeugen oder deren Teilen.

8. Substrat mit einer Lackierung, erholten nach dem Verfahren von Anspruch 4.

## Claims

1. Aqueous, lead-free cathodic electrodeposition (CEC) coating compositions, containing binders and optionally crosslinking agents, pigments and/or conventional lacquer additives, **characterised in that** they contain one or more salts of alkane sulfonic acids from the group comprising methane sulfonic acid, ethane sulfonic acid, propane sulfonic acid, trifluoromethane sulfonic acid, hydroxyethane sulfonic acid and hydroxypropane sulfonic acid, of bismuth and/or of organobismuth compounds in a total amount of 0.2 to 2 wt.%, calculated as bismuth metal and relative to the resin solids.

2. Process for the production of the CEC coating compositions according to claim 1, **characterised in that** the alkane sulfonic acid salts according to claim 1 are incorporated into a CEC coating composition or into an aqueous dispersion of the CEC binder and the latter is processed in the conventional way to produce a CEC coating composition.

3. Process according to claim 2, **characterised in that** the alkane sulfonic acid salts are incorporated in the form of a pigment paste containing pigments and/or fillers as well as CEC binders and/or paste resin, in the form of a catalyst paste containing CEC binders or paste resin or in the form of a catalyst preparation consisting of a suspension or solution.

4. Process for cathodic dip lacquering by connecting as cathode a substrate having an electrically conductive surface introduced into a dipping bath, **characterised in that** a CEC coating composition according to claim 1 is used as the dipping bath.

5. Use of the CEC coating compositions according to claim 1 for cathodic dip lacquering.

6. Use of the CEC coating compositions according to claim 1 for the production of primer coats by cathodic dip lacquering of substrates having electrically conductive surfaces.

7. Use according to claim 6 in the lacquering of motor vehicles or parts thereof.

8. Substrate with a lacquer film obtained by the process according to claim 4.

## Revendications

1. Masses de revêtement aqueuses et sans plomb, pouvant être déposées par voie cathodique (par cataphorèse), qui contiennent des liants, et éventuellement des agents de réticulation, des pigments et/ou des additifs usuels dans les peintures et vernis, **caractérisées en ce qu'**elles contiennent un ou plusieurs sels d'acides alcanesulfoniques choisis dans l'ensemble comprenant l'acide méthanesulfonique, l'acide éthanesulfonique, l'acide propanesulfonique, l'acide trifluorométhanesulfonique, l'acide hydroxyéthanesulfonique et l'acide hydroxypropanesulfonique, du bismuth et/ou de composés organiques du bismuth, en une quantité totale de 0,2 à 2 % en poids, calculée en bismuth métallique, et rapportée à l'extrait sec de la résine.

2. Procédé de préparation des masses de revêtement pour cataphorèse selon la revendication 1, **caractérisé en ce qu'**on incorpore les sels d'acides alcanesulfoniques selon la revendication 1 dans une masse de revêtement pour cataphorèse ou dans une dispersion aqueuse du liant pour cataphorèse, et on traite ces derniers d'une manière usuelle pour obtenir une masse de revêtement pour cataphorèse.

3. Procédé selon la revendication 2, **caractérisé en ce qu'**on incorpore les sels d'acides alcanesulfoniques, sous forme d'une pâte pigmentaire contenant des pigments et/ou des matières de charge et aussi des liants pour cataphorèse et/ou une résine en pâte, sous forme d'une pâte catalytique contenant des liants pour cataphorèse ou une résine en pâte, ou sous forme d'une préparation catalytique constituée d'une suspension ou d'une solution.

4. Procédé d'application au trempé, par voie cathodique, par montage sous forme d'une cathode d'un subjectile, incorporé dans un bain électrophorétique, et comportant une surface conductrice de l'électricité, **caractérisé en ce qu'**on utilise en tant que bain cataphorétique une masse de revêtement pour cataphorèse selon la revendication 1.

5. Utilisation des masses de revêtements cataphorétiques selon la revendication 1, pour l'application au trempé d'un vernis par voie cathodique.

6. Utilisation de la masse de revêtement pour cataphorèse selon la revendication 1, pour préparer des couches de fond, par revêtement au trempé par voie cathodique de subjectiles ayant une surface conductrice de l'électricité.

7. Utilisation selon la revendication 6 pour appliquer une peinture sur des véhicules à moteur ou des éléments de ces derniers.

8. Subjectile portant un revêtement de peinture, obtenu par le procédé selon la revendication 4.
